# EUROPEAN PATENT SPECIFICATION

(11) **EP 3 600 133 B1**
(45) Date of publication and mention of the grant of the patent: **12.07.2023**
(21) Application number: 18770734.4
(22) Date of filing: 20.03.2018
(51) Int. Cl.: A61C 7/28

(54) **SELF-LIGATING BRACKET HAVING A LIGATING MEMBER**
SELBSTLIGIERENDE SPANGE MIT EINEM LIGATURELEMENT
BRACKET AUTO-LIGATURANT AYANT UN ÉLÉMENT DE LIGATURE

(30) Priority: 22.03.2017 US 201762475073 P; 21.11.2017 US 201715820025
(43) Date of publication of application: 05.02.2020
(73) Proprietor: World Class Technology Corporation, McMinnville, OR 97128 (US)
(72) Inventor: RUIZ-VELA, Alberto, Alta Loma, California 91701 (US)
(74) Representative: Weal, Emily Teresa
(86) International application number: PCT/US2018/023403
(87) International publication number: WO 2018/175472

(56) References cited:
- EP-A1- 1 723 927
- US-A- 4 712 999
- US-A1- 2007 134 610
- US-A1- 2007 178 422
- US-A1- 2010 055 636
- US-A1- 2010 105 000
- US-B2- 7 780 443
- US-B2- 9 089 386
- US-B2- 9 089 386

## Description

### Technical Field

This application relates to self-ligating orthodontic brackets and, more specifically, to self-ligating orthodontic brackets and buccal tubes that incorporate a latching element into a ligating member.

### Background

Orthodontic treatment typically involves orthodontic devices that are used to apply mechanical forces to a patient's teeth to urge improperly positioned teeth into a correct alignment. One form of orthodontic treatment includes the use of self-ligating orthodontic brackets, where a single bracket is adhered to an individual tooth with a bonding material or other adhesive. Once the brackets are in position on the teeth, an archwire is inserted through a slot formed on each of the brackets. In this configuration, tightening of the archwire applies pressure on the brackets, which, in turn, urge movement of the teeth into a desired position and orientation.

In some designs, self-ligating brackets may include a ligating door or slide with a latch to retain the archwire in position within the slot. The ligating slide is movable between closed and open positions, to allow insertion and retention of an archwire within the archwire slot of the bracket. In such designs, the ligating slide provides a retention force that holds the ligating slide in either the open or closed position for ease of use. In many instances, the ligating slide is typically cycled (e.g., opened and closed) approximately six to ten times during the course of orthodontic treatment. Accordingly, conventional ligating slides are designed to optimize the retention force for a generally short life-cycle. On occasion, however, the number of cycles for specific treatments may increase due to additional archwire adjustments, additional archwire changes, or auxiliary treatment mechanics. In addition, in some instances, patients learn how to operate the ligating slide and have a tendency to "play" with their brackets, which results in additional open and close cycles, thereby reducing the retention force. Excessive reduction of the retention force may cause inadvertent opening of the ligating slide, which may increase the likelihood of disengagement of the archwire from the bracket, and result in treatment inefficiency due to a lack of sufficient mechanical force being applied to the tooth. In addition, a low retention force could also result in complete disassembly of the ligating member from the bracket or buccal tube. Moreover, when the archwire disengages from the slot, a practitioner may need to address any issues and/or replace the bracket/archwire as needed, which may extend overall treatment time for the patient.

Document US9 089 386 B2 shows an orthodontic bracket with a sliding ligating member having two ligation fingers and a flexible latching element in between. $

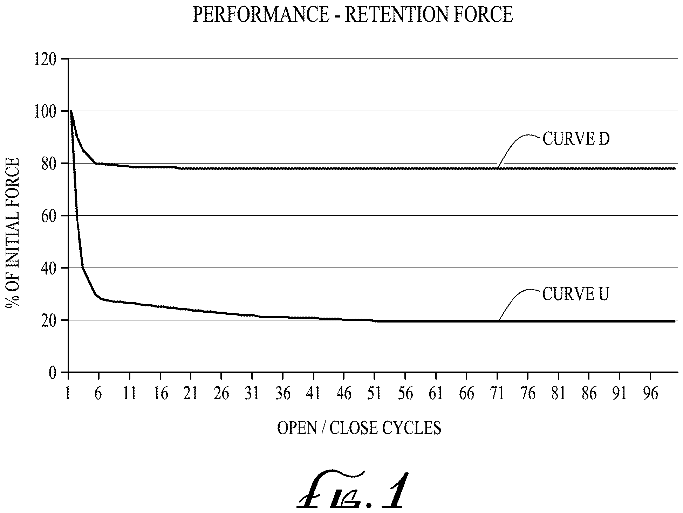

Accordingly, the present inventor has identified a need for a ligating member of an orthodontic bracket with an improved design to maintain an effective retention force for a significant number of opening/closing cycles. Such a design will maximize the number of open and close cycles the latching slide can tolerate without experiencing a dramatic reduction in the retention force that holds the ligating member in either the open or closed position. For example, the graph in FIG. 1 illustrates examples for a "desirable" retention force performance (illustrated as curve D) and an "undesirable" retention force performance (illustrated as curve U). In the graph, undesirable performance is characterized by a significant reduction in the retention force within the first few cycles and then plateauing at a force which is a small percentage of the initial retention force. Additional aspects and advantages will be apparent from the following detailed description of preferred embodiments, which proceeds with reference to the accompanying drawings.

### Brief Description of the Drawings

FIG. 1 is a graph illustrating an example of desirable and undesirable retention forces for a ligating slide in accordance with one embodiment.
FIGS. 2A and 2B illustrate an example embodiment of a conventional self-ligating bracket with a ligating slide illustrated in a closed position and in an open position, respectively.
FIG. 3A is a cross-sectional view illustrating an example installation procedure for a ligating slide onto the conventional self-ligating bracket of FIGS. 2A and 2B.
FIG. 3B is a cross-sectional view illustrating the conventional self-ligating bracket of FIG. 3A in a closed position.
FIGS. 4, 5A, and 5B collectively illustrate an example embodiment of a ligating member for a self-ligating bracket.
FIG. 6 illustrates the ligating member of FIGS. 4, 5A, and 5B coupled to a self-ligating bracket.
FIG. 7A illustrates typical contact points of an archwire relative to the ligating member and bracket body of a conventional self-ligating bracket.
FIG. 7B illustrates the contact points of an archwire seated in the self-ligating bracket with a ligating member illustrated in FIG. 6.
FIGS. 8A and 8B illustrate a comparison of the stress on a conventional ligating slide and the ligating member of FIGS. 4 and 5.

### Detailed Description of Preferred Embodiments

With reference to the drawings, this section describes particular embodiments of various orthodontic brackets and their detailed construction and operation. Thus appearances of the phrases "in one embodiment," "in an embodiment," or "in some embodiments" in various places throughout this specification are not necessarily all referring to the same embodiment. Furthermore, the described features, structures, and characteristics may be combined in any suitable manner in one or more embodiments. The subject of the present invention is a ligating member as defined in claim 1.

In the following description, particular components of the orthodontic brackets are described in detail. It should be understood that in some instances, well-known structures, materials, or operations are not shown or not described in detail to avoid obscuring more pertinent aspects of the embodiments. In addition, although the embodiments may illustrate and reference particular orthodontic bracket designs, other embodiments may include additional or fewer components than the described embodiments.

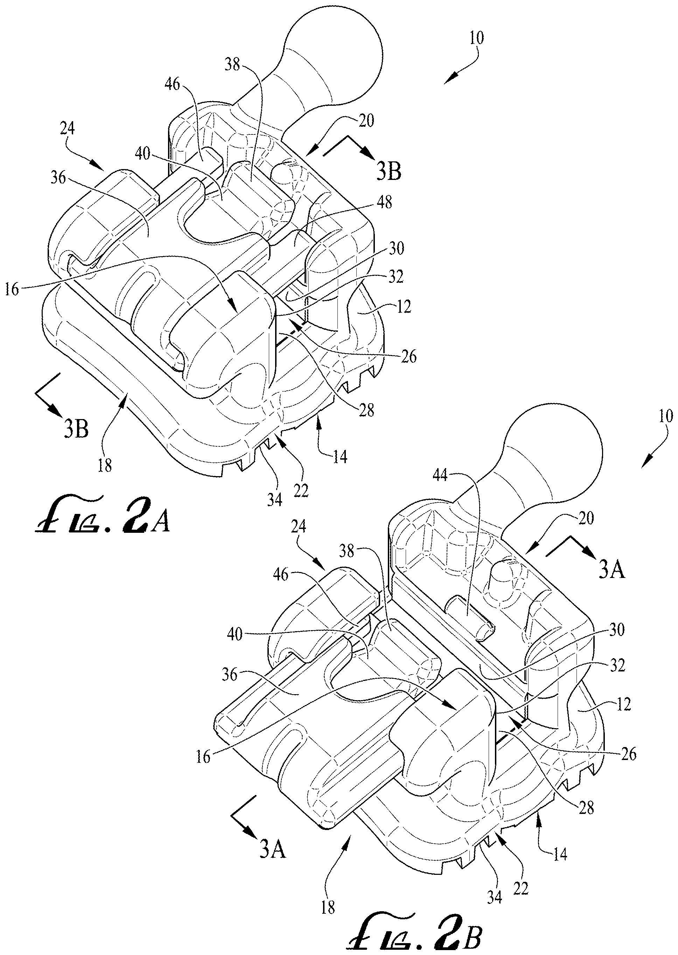

FIGS. 2A and 2B collectively illustrate an example embodiment of a conventional orthodontic self-ligating bracket 10 including a bracket body 12 with a ligating door 36 that may be moved relative to the bracket body 12 between a closed position and an open position. To establish a frame of reference, the following description (unless otherwise indicated) refers to the bracket 10 as being attached to a labial surface of a tooth on an upper jaw of the patient. For example, with reference to the bracket body 12 illustrated in FIG. 2A, when the bracket body 12 is mounted to a labial surface of a tooth in the patient's upper jaw, the bracket body 12 has a lingual side 14, a labial side 16, an occlusal side 18, a gingival side 20, a mesial end 22, and a distal end 24. Terms such as labial, lingual, mesial, distal, occlusal, and gingival are used to describe the bracket 10 and are relative to this frame of reference. It should be understood, however, that the embodiments of the disclosed subject matter are not limited to the chosen reference frame and descriptive terms, as the bracket 10 may be used on other teeth and in other orientations within the oral cavity. For example, the bracket 10 may also be located on an anterior tooth in the lower jaw or maxilla and be within the scope of the disclosed subject matter. Those of ordinary skill in the art will recognize that the descriptive terms used herein may not directly apply when there is a change in reference frame. The disclosed subject matter is intended to be independent of location and orientation within the oral cavity and the relative terms used to describe the illustrated embodiments are to provide a clear description in conjunction with the drawings. As such, the relative terms labial, lingual, mesial, distal, occlusal, and gingival in no way limit the disclosed subject matter to a particular location or orientation, but are instead offered to aid in understanding the disclosed subject matter.

With particular reference to FIG. 2A, the bracket 10 includes the bracket body 12 mountable to a tooth via a base structure 34 on the lingual side 14 of the bracket body 12. The base structure 34 may include a series of grooves or ridges for receiving an adhesive or other bonding material to provide a solid connection with the tooth and prevent dislodging. The bracket body 12 further includes an archwire slot 26 extending across the bracket body 12 generally in a mesial-distal direction, such as from the mesial end 22 to the distal end 24. The archwire slot 26 includes a generally planar base surface 28 and opposing sidewalls 30, 32 extending upwardly from the base surface 28 in the labial direction. In some embodiments, the sidewalls 30, 32 are perpendicular to the base surface 28 to form the generally rectangular archwire slot 26 having open ends formed along the labial side 16, and along the mesial and distal ends 22, 24, respectively, of the bracket body 12.

The bracket body 12 further includes a sliding ligating member, such as a sliding door 36, arranged on the labial side 16 of the bracket body 12 for retaining an archwire (not shown) within the archwire slot 26. The sliding door 36 includes a head portion 38 extending from a neck portion 40 and two bracket ears 46, 48 arranged on either side of the head portion 38. As noted previously, the sliding door 36 is movable along the gingival-occlusal direction to open the bracket body 12 and accommodate insertion of the archwire in the archwire slot 26, and to close the bracket body 12 to retain the archwire in position within the archwire slot 26 (see FIG. 2B). With particular reference to FIG. 2B, in the closed position, the archwire is urged downwardly into the archwire slot 26 and applies pressure to the bracket body 12 and the patient's teeth to effect the desired tooth movement. Additional details and configurations of an example embodiment of the bracket 10 are further described in U.S. Patent No. 9,004,916.

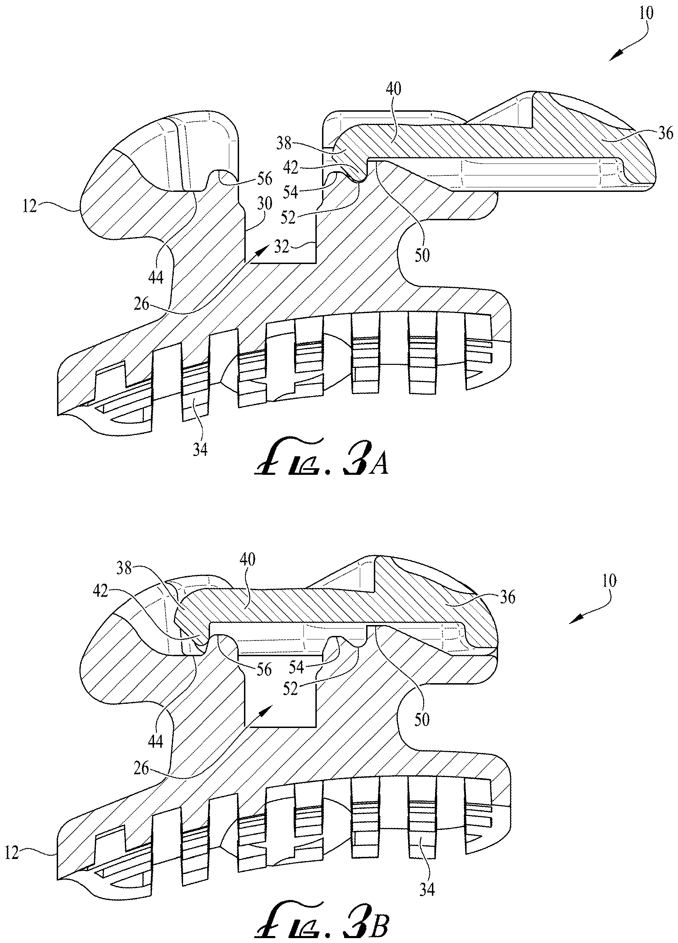

With particular reference to the cross-section views of FIGS. 3A and 3B, the following section provides details relating to an example initial installation process of the sliding door 36 for the bracket 10. With reference to FIG. 3A, the head portion 38 of the sliding door 36 includes a protrusion 42 arranged along the lingual side 14 of the sliding door 36. When installing the sliding door 36 on the bracket body 12, the protrusion 42 slides along the bracket body 12 and deflects over a first stop 50 formed on the bracket body 12 and engages a first groove 52. Essentially, the head portion 38 and neck portion 40 act as a spring element of the sliding door 36. As illustrated in FIG. 3B, when the sliding door 36 is moved to the closed position, the protrusion 42 deflects over a second stop 54 adjacent the first groove 52, crosses over the archwire slot 26, and deflects over a third stop 56 to engage a second groove 44 of the bracket body 12. In this position, the body of the sliding door 36 extends over the archwire slot 26 to retain the archwire within the archwire slot 26. When an adjustment to the archwire is required, the sliding door 36 may be disengaged from the second groove 44 and retracted until the protrusion 42 is received in the first groove 52. Accordingly, during normal operation of the sliding door 36, the head portion 38 and neck portion 40 of the sliding door 36 typically deflect two times with each opening and closure of the door.

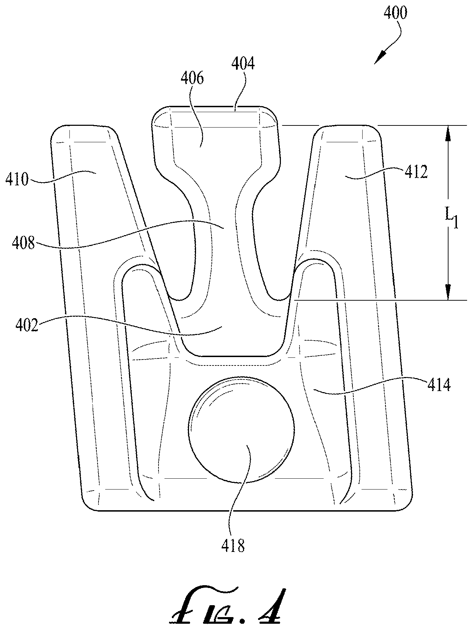

With general reference to FIGS. 4-7B, 8B the following disclosure describes an improved ligating member for an orthodontic bracket, the ligating member having a latching element with an improved geometry to accommodate increased open and close cycling of the ligating member and to improve longevity and performance of the ligating member. In addition, the improved geometry improves the rotation control of upper and lower teeth in the anterior segment from cuspid-to-cuspid. Additional details relating specifically to the ligating member of the orthodontic bracket are discussed in detail below.

FIG. 4 is an enlarged view of a ligating member 400 according to one embodiment. In some embodiments, the ligating member 400 may be used in place of the sliding door 36 in the bracket 10 described previously to retain the archwire in the archwire slot 26. Accordingly, to avoid obscuring more pertinent aspects of the disclosed subject matter, the following description proceeds with particular details and embodiments relating specifically to the ligating member 400 with the understanding that the ligating member 400 may be used in various embodiments of an orthodontic bracket, including the bracket 10 of FIGS. 2A and 2B.

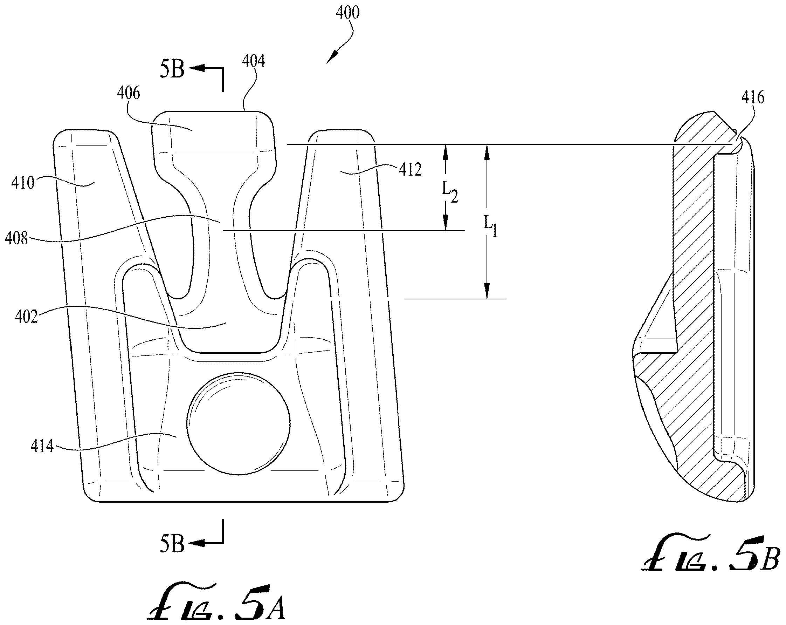

With reference to FIG. 4, the ligating member 400 includes a base 402 and a latching element 404 extending from the base 402 in a gingival direction. The latching element 404 includes a head portion 406 and a neck portion 408, with the neck portion 408 extending from the base 402. The head portion 406 includes a protrusion 416 (see FIG. 5B) formed on the lingual side 14 of the latching element 404. In a similar fashion as described previously with respect to FIGS. 3A and 3B, the protrusion 416 is designed and dimensioned to engage with the orthodontic bracket (such as the bracket 10) to secure the ligating member 400 to the bracket body (such as the bracket body 12), with the protrusion 416 deflecting over one or more stops formed on the bracket body (such as stops 54, 56) and being seated within any one of multiple grooves (such as the grooves 44, 52) for retaining the ligating member 400 in an open or closed position.

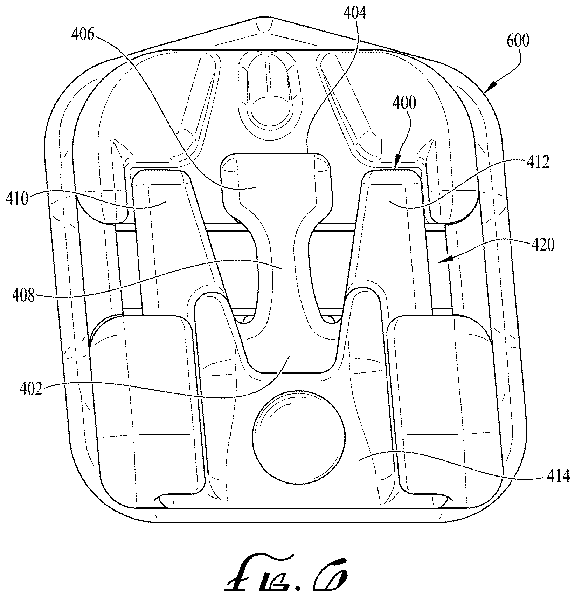

Referring again to FIG. 4, the ligating member 400 includes ligation fingers 410, 412 extending from the base 402 in the gingival direction and arranged on opposite sides of the latching element 404 such that each of the ligation fingers 410, 412 is offset from and laterally spaced apart from the latching element 404. The latching element 404 is offset from the ligation fingers 410, 412 in a labial direction (i.e., the latching element 404 is positioned above a horizontal plane at which the ligation fingers 410, 412 are positioned), such that neither the head portion 406 nor the neck portion 408 of the latching element 404 engages or otherwise contacts the archwire in the archwire slot 26 when the ligating member 400 is in the closed position on the bracket 10 (see also FIG. 6). Accordingly, the ligation fingers 410, 412 are both laterally offset and vertically offset relative to the latching element 404. In some embodiments, the ligating member 400 may also include a guide and ligation finger stiffener 414 arranged along the labial side 16 of the ligating member 400 to provide additional stiffness to the ligation fingers 410, 412. In addition, the guide and ligation finger stiffener 414 may also incorporate a guide or other feature 418 that provides a suitable means to open and close the ligating member 400. For example, in one embodiment, a dentist or other practitioner may insert a dental tool into the guide 418 to facilitate operation of the ligating member 400.

In one embodiment, the ligating member 400 may be formed via a metal injection molding process of sintered 17-4 stainless steel. In other embodiments, the orthodontic bracket may instead be cast or machined. In some embodiments, the ligating member 400 may be made using a manufacturing process different than the bracket body 12, and/or may be made of a different material than the bracket body 12. For example, in some embodiments, the ligating member 400 may comprise super elastic materials, such as nickel titanium, or spring materials, such as cobalt-chromium.

FIGS. 5A and 5B collectively illustrate various geometries of the features and characteristics of the ligating member 400. With collective reference to FIGS. 5A and 5B, the neck portion 408 of the latching element 404 generally has a width that is less than the width of the head portion 406. The width of the neck portion 408 gradually narrows from the base 402 toward a general midpoint of the neck portion 408, and then gradually widens from the general midpoint toward the head portion 406. In some embodiments, the width of the neck portion 408 varies from a region adjacent to the base 402 of the ligating member 400 to a region adjacent the head portion 406, but the width of the neck portion 408 is smaller than the width of the head portion 406 throughout the entirety of the neck portion 408.

With particular reference to FIG. 5A, the length, L₁, defines a distance measured from the centerline of the protrusion 416 of the head portion 406 to the bottom of the neck portion 408 adjacent the base 402, and the length, L₂, defines a distance measured from the centerline of the protrusion 416 on the head portion 406 to a general midpoint of the latching element 404 where the neck portion 408 has a minimum cross-section region. L2 is equal to or greater than 40% of L1. In some embodiments, L₂ is approximately 50% of L₁, but in other embodiments, or may range between 40% and 60% of L₁. According to the invention, the length L₁ (which is the deflection length of the latching element 404) is between 40% and 60% of the total length of the ligating member 400. In some embodiments, for example, L₁ is equal to or greater than 0.508 mm (0.020 in). However, other lengths may be used.

In some embodiments, the minimum cross-section region of the latching element 404 (or specifically the neck portion 408) is in the range of approximately 6.45 × 10⁻² mm² (1.0 × 10⁻⁴ in²) to 10.32 × 10⁻² mm² (1.6 × 10⁻⁴ in²). In some embodiments, the minimum volume in the minimum cross-section region of the latching element 402 may be within the range of 6.55 × 10⁻³ mm³ (4.0 × 10⁻⁷ in³) to 10.49 × 10⁻³ mm³ (6.4 × 10⁻⁷ in³). However, embodiments of the disclosure are not limited to minimum volumes in the minimum cross-section region of the neck portion 408 to this range, and other volumes may be used.

As an example only, in one embodiment of the ligating member 400, the ligating member 400 may have a distance L₁ measuring 0.914 mm (0.036 in), a distance L₂ being approximately 51.4% of L1, a minimum cross-section region of 9.16 × 10⁻² mm² (1.42 × 10⁻⁴ in²), and a minimum volume of 9.31 × 10⁻³ mm³ (5.68 × 10⁻⁷ in³). However, as will be understood by one of ordinary skill in the art, other values may be used, while preferably maintaining L₁ equal to or greater than 0.508 mm (0.020 in) but maintaining L₂ equal to or greater than 40% of L₁.

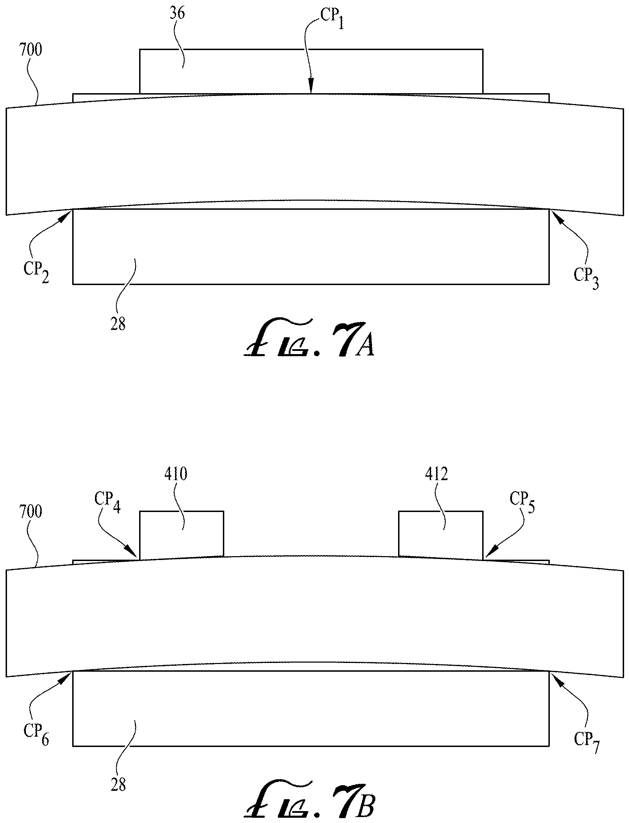

FIG. 6 illustrates an example embodiment of the ligating member 400 installed on a bracket body 600, which may have the same or similar features as the bracket body 12 discussed previously with reference to FIGS. 2A and 2B. Accordingly, details relating to specific features of the bracket body 600 are not further discussed herein to avoid obscuring more pertinent aspects of the embodiment. With reference to FIG. 6, the ligating member 400 is illustrated in the closed position. When the ligating member 400 is in the closed position, a portion of the ligation fingers 410, 412 is extended over the archwire slot 420 to retain the archwire in position, and the ends of the ligation fingers 410, 412 rest against a surface of the bracket body 600. In this configuration, the ligation fingers 410, 412 can maintain constant downward pressure against the archwire to effect the necessary movement on the patient's teeth as further described with respect to FIG. 7B. As described previously, the ligation fingers 410, 412 are preferably made of resilient materials, and the guide and ligation finger stiffener 414 may also add resilience to the ligation fingers 410, 412.

In some embodiments, a coating (not shown) may be applied to the underside of the ligating member 400 and to the upper surface of the bracket body 600 upon which the ligating member 400 slides to reduce the static coefficient of friction and help facilitate the sliding movement during use. In some embodiments, the static coefficient of friction may be reduced to 0.01. Typically, the coefficients of friction of the ligating member 400 and bracket body 600 would be expected to average about 0.7 (static) and 0.6 (dynamic) when steel is used for both components and when the sliding movement occurs with both surfaces being clean and dry. In some embodiments, the applied coating may reduce both the static and dynamic coefficient of friction by at least 50% of these average values. Accordingly, in such embodiments, the coating may reduce the static coefficient of friction to less than or equal to 0.35 and the dynamic coefficient of friction to less than or equal to 0.3. In addition, the hardness of the coating may be approximately equal to or greater than the material comprising the ligating member 400 and the bracket body 600 onto which the coating is being applied.

With reference to FIGS. 7A, and 7B, the following passages describe the distribution of contact forces for the sliding door 36 (FIG. 7A) and the ligating member 400 (FIG. 7B) disclosed herein. FIG. 7A illustrates the contact points of an archwire relative to the sliding door 36 of a conventional self-ligating bracket when positioned in an anterior segment. With reference to FIG. 7A, the sliding door 36 has a flat, planar bottom surface that contacts an archwire 700 and exerts downward force thereon. Because the archwire 700 is rounded and slightly curved when in the archwire slot 26, the archwire 700 and sliding door 36 have a single contact point, CP₁, at the height of the curvature of the archwire 700 as illustrated in FIG. 7A. In addition, the bottom of the archwire 700 also contacts the bottom wall of the archwire slot 26 at the mesial and distal edges (CP₂ and CP₃) of the bracket body 12, thereby resulting in three total points of contact imparted on the archwire 700 when mounted on a tooth in the anterior segment.

Turning to FIG. 7B, the improved design of the ligating member 400 having open space between the ligation fingers 410, 412 creates two independent contact points, CP₄ and CPs, against the archwire 700, one at the ligation finger 410 and one at the ligation finger 412 rather than the single contact point of the sliding door 36. In addition, the archwire 700 and sidewall of the bracket 10 also contact at the mesial and distal edges (CPs and CP₇) of the wall of the archwire slot 26 for a total of four contact points. In addition, the lingual side 14 of the ligation fingers 410, 412 may be angled to eliminate interference and move the rotation control to the mesial and distal edges of the ligation fingers 410, 412 for anterior teeth. In some embodiments, however, the ligation fingers 410, 412 may be planar, (i.e., no angle on the lingual side 14 of the fingers 410, 412). In this configuration, the contact points on the archwire 700 move from the outside edges of the ligation fingers 410, 412 (e.g., the location of CP₄ and CP₅ illustrated in FIG. 7B) to the inside edges of the ligation fingers 410, 412. Accordingly, one advantage of the improved design is that it allows the spacing between the ligation fingers 410, 412 to eliminate the single contact of the ligating member 400 at the height of curvature of the archwire 700, and instead provides for contact either on the outside edges or the inside edges of the ligation fingers 410, 412 depending on whether the design includes an angled lingual side or a planar lingual side.

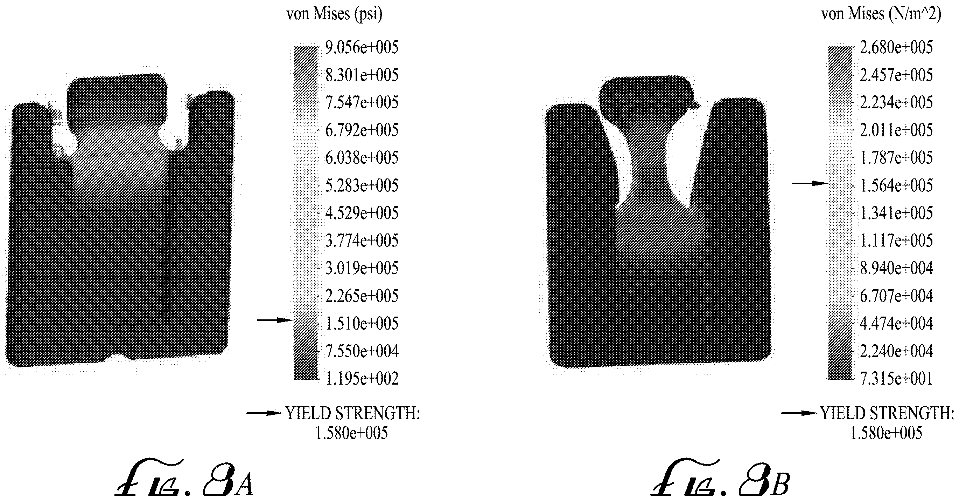

FIGS. 8A and 8B respectively illustrate a stress analysis of the head and neck portions of the sliding door 36 and the latching element 404 of the ligating member 400, each comprising 17-4 stainless steel. Based on the stress analysis results, the sliding door 36 requires a force of approximately 26.69 N (6 pounds) for 0.05588 mm (0.0022 in) deflection, whereas the latching element 404 requires 7.56 N (1.7 pounds) for 0.05588 mm (0.0022 in) deflection. The max stress of the sliding door 36 at 0.05588 mm (0.0022 in) deflection is 6243.89 MPa (905,600 PSI), which is approximately 8.5 times the yield strength of 17-4 stainless steel material of 1089.37 MPa (158,000 PSI). Thus, significant deformation occurs in the sliding door 36 with just a first cycle of opening and closing the sliding door 36 relative to the bracket body 12. Therefore, each cycle of the sliding door 36 causes the open and close force to decrease, resulting in a higher probability of the sliding door 36 detaching from the bracket body 12 with each use of the sliding door 36.

The max stress of the latching element 404, on the other hand, at 0.05588 mm (0.0022 in) deflection is 1847.79 MPa (268,000 PSI) for 17-4 stainless steel, which is only 1.7 times the yield strength of 17-4 stainless steel. Accordingly, the max stress is much less than the sliding door 36, which results in less deformation of the latching element 404 with each open and close cycle of the ligating member 400.

It should be understood that while the figures illustrate an example geometric design for the ligating member 400, other configurations may be possible. In addition although the description above contains much specificity, these details should not be construed as limiting the scope of the disclosed subject matter, but as merely providing illustrations of some embodiments. It should be understood that subject matter disclosed in one portion herein can be combined with the subject matter of one or more of other portions herein as long as such combinations are not mutually exclusive or inoperable.

The scope of the invention is defined by the claims.

## Claims

1. A ligating member (400) operable to retain an archwire within a slot of an orthodontic bracket or buccal tube, the ligating member comprising:
a base (402);
a first ligation finger (410) extending from the base;
a second ligation finger (412) extending from the base, the second ligation finger spaced apart and offset from the first ligation finger; and
a latching element (404) extending from the base in a gingival direction, the latching element positioned between the first ligation finger and the second ligation finger, the latching element including:
a neck portion (408) extending from the base,
a head portion (406) extending from the neck portion, the head portion including a protrusion (416) formed on a lingual side (14) of the latching element (404), $
wherein the neck portion (408) generally has a width that is less than the width of the head portion (406), $
wherein the width of the neck portion (408) gradually narrows from the base (402) toward a general midpoint of the neck portion (408), and then gradually widens from the general midpoint toward the head portion (406), so that the neck portion has a minimum cross-section region, and
wherein the latching element has a length, L₁, measured from the base to a centerline of the protrusion, and a length, L₂, measured from a centerline of the minimum cross-section region to the centerline of the protrusion, wherein L₂ is equal to or greater than 40% of L₁,
**characterized in that** L₁ is between 40% and 60% of a total length of the ligating member.

2. The ligating member of claim 1, wherein L₁ is equal to or greater than 0.508 mm (0.020 in).

3. The ligating member of claim 1, wherein the minimum cross-section region of the neck portion has an area in the range of 6.45 × 10⁻² mm² (1.0 × 10⁻⁴ in²) to 10.32 × 10⁻² mm² (1.6 × 10⁻⁴ in²).

4. The ligating member of claim 1, wherein a minimum volume of the minimum cross-section region is in the range of 6.55 × 10⁻³ mm³ (4.0 × 10⁻⁷ in³) to 10.49 × 10⁻³ mm³ (6.4 × 10⁻⁷ in³).

5. The ligating member of claim 1, wherein the latching element is offset from the first ligation finger and the second ligation finger.

6. The ligating member of claim 1, wherein the ligating member comprises 17-4 stainless steel, nickel titanium, or cobalt-chromium.

7. The ligating member of claim 1, further comprising a coating applied to an underside of the first and second ligation fingers, and the latching element.

8. An orthodontic bracket (10) comprising:
a bracket body (12) mountable to a tooth, the bracket body further including a slot (26) formed therein and dimensioned to receive an archwire; and
a ligating member (400) mountable to the bracket body and moveable between an open and closed position to retain the archwire within the slot of the bracket body when mounted thereto, the ligating member comprising:
a base (402);
a first ligation finger (410) extending from the base and over the slot;
a second ligation finger (412) extending from the base and over the slot, the second ligation finger spaced apart and offset from the first ligation finger; and
a latching element (404) extending from the base in a gingival direction over the slot, the latching element positioned between the first ligation finger and the second ligation finger, the latching element including:
a neck portion (408) extending from the base,
a head portion (406) extending from the neck portion, the head portion including a protrusion (416), formed on a lingual side (14) of the latching element (404) wherein the neck portion (408) generally has a width that is less than the width of the head portion (406),
wherein the width of the neck portion (408) gradually narrows from the base (402) toward a general midpoint of the neck portion (408), and then gradually widens from the general midpoint toward the head portion (406), so that the neck portion has a minimum cross-section region, and
wherein the latching element has a length, L₁, measured from the base to a centerline of the protrusion, and a length, L₂, measured from a centerline of the minimum cross-section region to the centerline of the protrusion, wherein L₂ is equal to or greater than 40% of L₁,
**characterized in that** L₁ is between 40% and 60% of a total length of the ligating member.

9. The orthodontic bracket of claim 8, the ligating member including a first coating applied to an underside thereof and the bracket body including a second coating applied to an upper surface thereof, wherein the first and second coatings cooperate to reduce the coefficient of friction between the ligating member and the bracket body to facilitate sliding movement of the ligating member.

10. The ligating member of claim 1, further comprising:
a stiffener arranged on a labial side of the ligating member to provide stiffness to the first ligation finger and to the second ligating finger.

11. The orthodontic bracket of claim 8, further comprising:
a stiffener arranged on a labial side of the ligating member to provide stiffness to the first ligation finger and to the second ligation finger.

12. The ligating member of claim 10, wherein the stiffener includes a guide for receiving a tool to facilitate opening and closing of the ligating member.

13. The orthodontic bracket of claim 11, wherein the stiffener includes a guide for receiving a tool to facilitate opening and closing of the ligating member.

## Patentansprüche

1. Ligierendes Glied (400), das betriebsfähig ist, um einen Bogendraht innerhalb eines Schlitzes einer kieferorthopädischen Bracket oder eines bukkalen Rohrs zu halten, das ligierende Glied umfassend:
eine Basis (402);
einen ersten Ligationsfinger (410), der sich von der Basis erstreckt;
einen zweiten Ligationsfinger (412), der sich von der Basis erstreckt, wobei der zweite Ligationsfinger von dem ersten Ligationsfinger beabstandet und von diesem versetzt ist; und
ein Verriegelungselement (404), das sich von der Basis in einer gingivalen Richtung erstreckt, wobei das Verriegelungselement zwischen dem ersten Ligationsfinger und dem zweiten Ligationsfinger positioniert ist, wobei das Verriegelungselement beinhaltet:
einen Halsabschnitt (408), der sich von der Basis erstreckt,
einen Kopfabschnitt (406), der sich von dem Halsabschnitt erstreckt, wobei der Kopfabschnitt einen Vorsprung (416) beinhaltet, der auf einer lingualen Seite (14) des Verriegelungselements (404) ausgebildet ist,
wobei der Halsabschnitt (408) im Allgemeinen eine Breite aufweist, die kleiner als die Breite des Kopfabschnitts (406) ist,
wobei sich die Breite des Halsabschnitts (408) allmählich von der Basis (402) zu einem allgemeinen Mittelpunkt des Halsabschnitts (408) hin verengt und dann allmählich von dem allgemeinen Mittelpunkt zu dem Kopfabschnitt (406) hin breiter wird, sodass der Halsabschnitt einen Mindestquerschnittsbereich aufweist, und
wobei das Verriegelungselement eine Länge, L₁, gemessen von der Basis zu einer Mittellinie des Vorsprungs, und eine Länge, L₂, gemessen von einer Mittellinie des Mindestquerschnittsbereichs zu der Mittellinie des Vorsprungs, aufweist, wobei L₂ gleich oder größer als 40 % von L₁ ist,
**dadurch gekennzeichnet, dass** L₁ zwischen 40 % und 60 % einer Gesamtlänge des ligierenden Glieds liegt.

2. Ligierendes Glied nach Anspruch 1, wobei L₁ gleich oder größer als 0,508 mm (0,020 Zoll) ist.

3. Ligierendes Glied nach Anspruch 1, wobei der Mindestquerschnittsbereich des Halsabschnitts einen Bereich in dem Bereich von 6,45 × 10⁻² mm² (1,0 × 10-⁴ in²) bis 10,32 × 10⁻² mm²(1,6 × 10⁻⁴ in²) aufweist.

4. Ligierendes Glied nach Anspruch 1, wobei ein Mindestvolumen des Mindestquerschnittsbereichs in dem Bereich von 6,55 × 10⁻³ mm³ (4,0 × 10⁻⁷ in³) bis 10,49 × 10⁻³ mm³(6,4 × 10⁻⁷ in³) liegt.

5. Ligierendes Glied nach Anspruch 1, wobei das Verriegelungselement von dem ersten Ligationsfinger und dem zweiten Ligationsfinger versetzt ist.

6. Ligierendes Glied nach Anspruch 1, wobei das ligierende Glied 17-4 Edelstahl, Nickeltitan oder Kobalt-Chrom umfasst.

7. Ligierendes Glied nach Anspruch 1, ferner umfassend eine Beschichtung, die auf eine Unterseite des ersten und des zweiten Ligationsfingers und das Verriegelungselement aufgebracht wird.

8. Kieferorthopädische Bracket (10), umfassend:
einen Bracket-Körper (12), der an einem Zahn montierbar ist, wobei der Bracket-Körper ferner einen Schlitz (26) beinhaltet, der darin ausgebildet und dimensioniert ist, um einen Bogendraht aufzunehmen; und
ein Ligierendes Glied (400), das an dem Bracket-Körper montierbar ist und zwischen einer offenen und einer geschlossenen Position bewegbar ist, um den Bogendraht innerhalb des Schlitzes des Bracket-Körpers zu halten, wenn er daran montiert ist, das ligierende Glied umfassend:
eine Basis (402);
einen ersten Ligationsfinger (410), der sich von der Basis und über dem Schlitz erstreckt;
einen zweiten Ligationsfinger (412), der sich von der Basis und über dem Schlitz erstreckt, wobei der zweite Ligationsfinger von dem ersten Ligationsfinger beabstandet und von diesem versetzt ist; und
ein Verriegelungselement (404), das sich von der Basis in einer gingivalen Richtung über den Schlitz erstreckt, wobei das Verriegelungselement zwischen dem ersten Ligationsfinger und dem zweiten Ligationsfinger positioniert ist, wobei das Verriegelungselement beinhaltet:
einen Halsabschnitt (408), der sich von der Basis erstreckt,
einen Kopfabschnitt (406), der sich von dem Halsabschnitt erstreckt, wobei der Kopfabschnitt einen Vorsprung (416) beinhaltet, der an einer lingualen Seite (14) des Verriegelungselements (404) ausgebildet ist,
wobei der Halsabschnitt (408) im Allgemeinen eine Breite aufweist, die kleiner als die Breite des Kopfabschnitts (406) ist,
wobei sich die Breite des Halsabschnitts (408) allmählich von der Basis (402) zu einem allgemeinen Mittelpunkt des Halsabschnitts (408) hin verengt und dann allmählich von dem allgemeinen Mittelpunkt zu dem Kopfabschnitt (406) hin breiter wird, sodass der Halsabschnitt einen Mindestquerschnittsbereich aufweist, und
wobei das Verriegelungselement eine Länge, L₁, gemessen von der Basis zu einer Mittellinie des Vorsprungs, und eine Länge, L₂, gemessen von einer Mittellinie des Mindestquerschnittsbereichs zu der Mittellinie des Vorsprungs, aufweist, wobei L₂ gleich oder größer als 40 % von L₁ ist,
**dadurch gekennzeichnet, dass** L₁ zwischen 40 % und 60 % einer Gesamtlänge des ligierenden Glieds liegt.

9. Kieferorthopädische Bracket nach Anspruch 8, wobei das ligierende Glied eine erste Beschichtung beinhaltet, die auf eine Unterseite davon aufgebracht ist, und der Bracket-Körper eine zweite Beschichtung beinhaltet, die auf eine obere Oberfläche davon aufgebracht ist, wobei die erste und die zweite Beschichtung zusammenwirken, um den Reibungskoeffizienten zwischen dem ligierenden Glied und dem Bracket-Körper zu reduzieren, um die Gleitbewegung des ligierenden Glieds zu erleichtern.

10. Ligierendes Glied nach Anspruch 1, ferner umfassend:
ein Versteifungsmittel, das auf einer labialen Seite des ligierenden Glieds angeordnet ist, um dem ersten Ligationsfinger und dem zweiten Ligationsfinger eine Steifigkeit bereitzustellen.

11. Kieferorthopädische Bracket nach Anspruch 8, ferner umfassend:
ein Versteifungsmittel, das auf einer labialen Seite des ligierenden Glieds angeordnet ist, um dem ersten Ligationsfinger und dem zweiten Ligationsfinger die Steifigkeit bereitzustellen.

12. Ligierendes Glied nach Anspruch 10, wobei die Versteifungsmittel eine Führung zum Aufnehmen eines Werkzeugs beinhaltet, um ein Öffnen und ein Schließen des ligierenden Glieds zu erleichtern.

13. Kieferorthopädische Bracket nach Anspruch 11, wobei das Versteifungsmittel eine Führung zum Aufnehmen eines Werkzeugs beinhaltet, um das Öffnen und das Schließen des ligierenden Glieds zu erleichtern.

## Revendications

1. Élément de ligature (400) fonctionnel pour retenir un arc dentaire à l'intérieur d'une fente d'un support orthodontique ou tube buccal, l'élément de ligature comprenant :
une base (402) ;
un premier doigt de ligature (410) s'étendant depuis la base ;
un second doigt de ligature (412) s'étendant depuis la base, le second doigt de ligature étant espacé et décalé du premier doigt de ligature, et
un élément de verrouillage (404) s'étendant depuis la base dans une direction gingivale, l'élément de verrouillage étant positionné entre le premier doigt de ligature et le second doigt de ligature, l'élément de verrouillage comportant :
une partie de col (408) s'étendant depuis la base,
une partie de tête (406) s'étendant depuis la partie de col, la partie de tête comportant une protrusion (416) formée sur un côté lingual (14) de l'élément de verrouillage (404),
dans lequel la partie de col (408) présente généralement une largeur qui est inférieure à la largeur de la partie de tête (406),
dans lequel la largeur de la partie de col (408) se rétrécit progressivement de la base (402) vers un point médian général de la partie de col (408), puis s'élargit progressivement du point médian général vers la partie de tête (406), de sorte que la partie de col présente une région de section transversale minimale, et
dans lequel l'élément de verrouillage présente une longueur, L₁, mesurée de la base à une ligne médiane de la saillie, et une longueur, L₂, mesurée d'une ligne médiane de la région de section transversale minimale à la ligne médiane de la saillie, dans lequel L₂ est égale ou supérieure à 40 % de L₁, **caractérisé en ce que** L₁ est comprise entre 40 % et 60 % d'une longueur totale de l'élément de ligature.

2. Élément de ligature selon la revendication 1, dans lequel L₁ est égale ou supérieure à 0,508 mm (0,020 pouce).

3. Élément de ligature selon la revendication 1, dans lequel la région de section transversale minimale de la partie de col présente une zone dans la plage de 6,45 × 10⁻² mm²(1,0 × 10⁻⁴dans²) à 10,32 × 10⁻² mm²(1.6 × 10⁻⁴dans²).

4. Élément de ligature selon la revendication 1, dans lequel un volume minimal de la région de section transversale minimale est dans la plage de 6,55 × 10⁻³ mm³(4,0 × 10⁻⁷dans³) à 10,49 × 10⁻³ mm³(6.4 × 10⁻⁷dans³).

5. Élément de ligature selon la revendication 1, dans lequel l'élément de verrouillage est décalé du premier doigt de ligature et du second doigt de ligature.

6. Élément de ligature selon la revendication 1, dans lequel l'élément de ligature comprend de l'acier inoxydable de 17-4, du titane nickel, ou du cobalt-chrome.

7. Élément de ligature selon la revendication 1, comprenant en outre un revêtement appliqué sur une face inférieure des premier et second doigts de ligature, et l'élément de verrouillage.

8. Support orthodontique (10) comprenant :
un corps de support (12) pouvant être monté sur une dent, le corps de support comportant en outre une fente (26) formée à l'intérieur et dimensionnée pour recevoir un arc dentaire ; et
un élément de ligature (400) pouvant être monté sur le corps de support et mobile entre une position ouverte et fermée pour retenir l'arc dentaire à l'intérieur de la fente du corps de support lorsqu'il est monté à celui-ci, l'élément de ligature comprenant :
une base (402) ;
un premier doigt de ligature (410) s'étendant depuis la base et sur la fente ;
un second doigt de ligature (412) s'étendant depuis la base et sur la fente, le second doigt de ligature étant espacé et décalé du premier doigt de ligature ; et
un élément de verrouillage (404) s'étendant depuis la base dans une direction gingivale sur la fente, l'élément de verrouillage étant positionné entre le premier doigt de ligature et le second doigt de ligature, l'élément de verrouillage comportant :
une partie de col (408) s'étendant depuis la base,
une partie de tête (406) s'étendant depuis la partie de col, la partie de tête comportant une protrusion (416), formée sur un côté lingual (14) de l'élément de verrouillage (404)
dans lequel la partie de col (408) présente généralement une largeur qui est inférieure à la largeur de la partie de tête (406),
dans lequel la largeur de la partie de col (408) se rétrécit progressivement de la base (402) vers un point médian général de la partie de col (408), puis s'élargit progressivement du point médian général vers la partie de tête (406), de sorte que la partie de col présente une région de section transversale minimale, et
dans lequel l'élément de verrouillage présente une longueur, L₁, mesurée de la base à une ligne médiane de la protrusion, et une longueur, L₂, mesurée d'une ligne médiane de la région de section transversale minimale à la ligne médiane de la protrusion, dans lequel L₂ est égale ou supérieure à 40 % de L₁,
**caractérisé en ce que** L₁ est comprise entre 40 % et 60 % d'une longueur totale de l'élément de ligature.

9. Support orthodontique selon la revendication 8, l'élément de ligature comportant un premier revêtement appliqué sur une face inférieure de celui-ci et le corps de support comportant un second revêtement appliqué sur une surface supérieure de celui-ci, dans lequel les premier et second revêtements coopèrent pour réduire le coefficient de frottement entre l'élément de ligature et le corps de support pour faciliter le mouvement de coulissement de l'élément de ligature.

10. Élément de ligature selon la revendication 1, comprenant en outre :
un raidisseur agencé sur un côté labial de l'élément de ligature pour fournir une rigidité au premier doigt de ligature et au second doigt de ligature.

11. Support orthodontique selon la revendication 8, comprenant en outre :
un raidisseur agencé sur un côté labial de l'élément de ligature pour fournir une rigidité au premier doigt de ligature et au second doigt de ligature.

12. Élément de ligature selon la revendication 10, dans lequel le raidisseur comporte un repère destiné à recevoir un outil pour faciliter l'ouverture et la fermeture de l'élément de ligature.

13. Support orthodontique selon la revendication 11, dans lequel le raidisseur comporte un repère destiné à recevoir un outil pour faciliter l'ouverture et la fermeture de l'élément de ligature.
